# EUROPÄISCHE PATENTSCHRIFT

(11) **EP 3 966 840 B1**
(45) Veröffentlichungstag und Bekanntmachung des Hinweises auf die Patenterteilung: **23.10.2024**
(21) Anmeldenummer: 20727163.6
(22) Anmeldetag: 08.05.2020
(51) Int. Cl.: F16F 7/10, H01F 7/16, H01F 7/08, H01F 7/129

(54) **AKTORVORRICHTUNG ZUR AKTIVEN SCHWINGUNGSREDUZIERUNG, -DÄMPFUNG UND/ODER -TILGUNG**
ACTUATOR DEVICE FOR ACTIVELY REDUCING, DAMPING AND/OR ABSORBING VIBRATIONS
DISPOSITIF D'ACTIONNEMENT POUR RÉDUIRE, AMORTIR ET/OU ÉLIMINER ACTIVEMENT DES VIBRATIONS

(30) Priorität: 10.05.2019 DE 102019112334
(43) Veröffentlichungstag der Anmeldung: 16.03.2022
(73) Patentinhaber: ETO MAGNETIC GmbH, 78333 Stockach (DE)
(72) Erfinder: FANGAUER, Philipp, 78465 Konstanz (DE); VINCON, Peter, 78333 Stockach (DE)
(74) Vertreter: Daub, Thomas
(86) Internationale Anmeldenummer: PCT/EP2020/062873
(87) Internationale Veröffentlichungsnummer: WO 2020/229347

(56) Entgegenhaltungen:
- EP-A1- 3 276 201
- EP-A1- 3 364 532
- EP-A1- 3 454 349
- DE-A1- 102013 202 166
- DE-A1- 102014 200 647
- JP-A- 2012 042 022
- US-A- 6 105 943

## Beschreibung

### Stand der Technik

Die Erfindung betrifft eine Aktorvorrichtung zur aktiven Schwingungsreduzierung, - dämpfung und/oder -tilgung nach dem Oberbegriff des Anspruchs 1, einen Magnetaktor nach Anspruch 19, ein schwingungsgedämpftes Motorlager nach Anspruch 20 und ein Verfahren mit der Aktorvorrichtung nach Anspruch 21.

Aus den Veröffentlichungen DE 10 2014 200 647 A1, EP 3 454 349 A1, DE 10 2013 202 166 A1, EP 3 364 532 A1 und US 6,105,943 A sind bereits Aktorvorrichtungen zur aktiven Schwingungsreduzierung mit zumindest einem beweglich gelagerten Ankerelement und mit zumindest einem mit dem Ankerelement gekoppelten und zumindest abschnittsweise um das Ankerelement verlaufenden Permanentmagnet bekannt.

Die Aufgabe der Erfindung besteht insbesondere darin, eine gattungsgemäße Vorrichtung mit vorteilhaften Eigenschaften hinsichtlich einer Effizienz, insbesondere einer Montageeffizienz bereitzustellen. Die Aufgabe wird erfindungsgemäß durch die Merkmale der Patentansprüche 1 und 19-21 gelöst, während vorteilhafte Ausgestaltungen und Weiterbildungen der Erfindung den Unteransprüchen entnommen werden können.

### Vorteile der Erfindung

Die Erfindung geht aus von einer Aktorvorrichtung zur aktiven Schwingungsreduzierung, -dämpfung und/oder -tilgung, insbesondere von durch eine externe Vorrichtung erzeugte Schwingungen, mit zumindest einem beweglich gelagerten Ankerelement und mit zumindest einem mit dem Ankerelement, insbesondere mit einer Außenseite des Ankerelements, vorzugsweise einem Außendurchmesser des Ankerelements, gekoppelten und zumindest abschnittsweise, insbesondere ringförmig, um das Ankerelement verlaufenden Permanentmagnet.

Es wird vorgeschlagen, dass der Permanentmagnet zumindest in einer zumindest im Wesentlichen parallel zu einer, insbesondere vorgesehenen, Hauptbewegungsachse des Ankerelements verlaufenden Axialrichtung des Ankerelements von dem Ankerelement, insbesondere zumindest zu zwei Seiten, vorzugsweise genau zu zwei Seiten, vorteilhaft zumindest zu drei Seiten, bevorzugt genau zu drei Seiten und besonders bevorzugt höchstens zu drei Seiten, eingekapselt ist. Dadurch können vorteilhafte Eigenschaften hinsichtlich einer Effizienz, insbesondere einer Montageeffizienz, erreicht werden. Insbesondere kann vorteilhaft ein Einpassen von Permanentmagneten in dem Ankerelement vereinfacht werden. Zudem kann vorteilhaft auf in Axialrichtung des Ankerelements außenliegende Permanentmagnete verzichtet werden. Dadurch kann einerseits vorteilhaft eine Anzahl an erforderlichen, kostenintensiven Permanentmagneten reduziert werden, wodurch insbesondere eine hohe Kosteneffizienz erreicht werden kann. Andererseits kann dadurch eine hohe Stabilität und/oder Beschädigungsresistenz des Magnetankers gegen Stöße erreicht werden, insbesondere dadurch, dass ein Risiko von Brüchen und/oder Abplatzungen von axial außenliegenden Teilen bei einem starken Anschlagen des Ankerelements in der Axialrichtung des Ankerelements bei dem Permanentmagnet wesentlich größer ist als bei einem Eisenkern. Außerdem kann vorteilhaft eine Montageeffizienz erhöht werden, insbesondere dadurch, dass eine Montage von nah beieinander angeordneten Permanentmagneten an dem Ankerelement, welche insbesondere aufgrund der gegenseitigen Anziehung und Abstoßung der Permanentmagnete besonders aufwändig ist, aufgrund der reduzierten Anzahl von notwendigen Permanentmagneten vereinfacht wird. Des Weiteren kann durch die vorgeschlagene Ausgestaltung eine vorteilhafte Bauraumeffizienz, insbesondere eine Aktorvorrichtung mit besonders geringem, insbesondere axialen, Bauraum, erreicht werden.

Unter einer "Aktorvorrichtung" soll in diesem Zusammenhang insbesondere eine Magnetaktorvorrichtung verstanden werden. Insbesondere bildet die Aktorvorrichtung zumindest einen Teil, insbesondere eine Unterbaugruppe, eines Magnetaktors aus. Vorteilhaft ist die Aktorvorrichtung zumindest zu einer Verwendung in einem Motorlager, insbesondere einem schwingungsreduzierten Motorlager, vorgesehen. Insbesondere ist die Aktorvorrichtung, vorzugsweise der Magnetaktor, dazu vorgesehen, eine extern erzeugte Schwingung aktiv zu reduzieren, zu dämpfen und/oder zu tilgen. Insbesondere ist die Aktorvorrichtung, vorzugsweise der Magnetaktor, dazu vorgesehen, Schwingungen zu erzeugen, welche die extern erzeugten Schwingungen aktiv dämpfen. Insbesondere ist die Aktorvorrichtung, vorzugsweise der Magnetaktor, dazu vorgesehen, Schwingungen zu erzeugen, welche den extern erzeugten Schwingungen entgegengerichtet sind.

Ferner soll unter einem "Ankerelement" ein Bauteil verstanden werden, welches bei einem Betrieb der Aktorvorrichtung dazu vorgesehen ist, eine Bewegung auszuüben, welche die Funktion des Aktors bestimmt, beispielsweise eine schwingungsdämpfende Gegenschwingung. Vorzugsweise ist das Ankerelement mittels eines magnetischen Signals, insbesondere eines Magnetfelds, beeinflussbar. Insbesondere ist das Ankerelement dazu vorgesehen, in Reaktion auf ein magnetisches Signal eine Bewegung, insbesondere eine Linearbewegung, auszuführen. Insbesondere besteht das Ankerelement dabei zumindest teilweise aus einem magnetisch aktiven, insbesondere (ferro-) magnetischen und/oder magnetisierbaren, Material, vorteilhaft aus Eisen und/oder weichmagnetischem Stahl. Insbesondere bildet das Ankerelement einen Tauchanker bzw. einen Tauchkern eines Magnetaktors, insbesondere eines Hubmagneten, aus, welcher insbesondere zumindest innerhalb eines Inneren zumindest einer Magnetspule, insbesondere Hohlspule, des Magnetaktors, insbesondere des Hubmagneten, bewegbar ist. Insbesondere ist die Magnetspule des Magnetaktors dazu vorgesehen, das Magnetfeld zu erzeugen, welches dazu vorgesehen ist, mit dem Ankerelement wechselzuwirken und/oder das Ankerelement in Richtung einer Längsmittelachse des Magnetaktors, insbesondere der Magnetspule, zu beschleunigen.

Insbesondere umfasst die Aktorvorrichtung zumindest zwei, vorzugsweise genau zwei Permanentmagnete, die mit dem Ankerelement gekoppelt sind. Die Permanentmagnete sind insbesondere um das gesamte Ankerelement umlaufend ausgebildet. Insbesondere sind die zwei Permanentmagnete in der Axialrichtung eng benachbart und/oder kontaktierend aneinander anliegend angeordnet. Unter der Wendung "eng benachbart" soll insbesondere mit einem axialen Abstand von weniger als 2 mm, vorzugsweise weniger als 1 mm, vorteilhaft weniger als 0,5 mm, bevorzugt weniger als 0,1 mm und besonders bevorzugt weniger als 0,01 mm verstanden werden. Der Permanentmagnet, bzw. die Permanentmagnete, sind insbesondere fest mit dem Ankerelement gekoppelt, vorzugsweise kraft- und/oder formschlüssig mit dem Ankerelement gekoppelt. Bevorzugt sind die Permanentmagnete auf das Ankerelement aufgeklebt. Alternativ ist jedoch auch denkbar, dass die Permanentmagnete beispielweise mit dem Ankerelement, insbesondere formschlüssig, verklemmt sind. Insbesondere sind die Permanentmagnete als (gesinterte) NdFeB-Magnete ausgebildet. Alternativ sind jedoch auch andere Arten von Permanentmagneten vorstellbar, welche vorzugsweise eine relativ hohe Magnetisierung aufweisen.

Darunter, dass der Permanentmagnet "in der Axialrichtung eingekapselt" ist, soll insbesondere verstanden werden, dass der Permanentmagnet zumindest in der Axialrichtung oberhalb und/oder unterhalb von dem Ankerelement, insbesondere dem aus einem ferromagnetischen Material ausgebildetem Ankerelement, bedeckt ist. Insbesondere bildet der Permanentmagnet eine Art Hohlzylinder aus. Insbesondere ist eine senkrecht zu einer Mantelfläche des hohlzylinderförmigen Permanentmagneten angeordnete Oberfläche des hohlzylinderförmigen Permanentmagnets, insbesondere ein Kreisring des Permanentmagneten, im eingekapselten Zustand zumindest teilweise, vorzugsweise vollständig von dem Ankerelement, insbesondere dem aus einem ferromagnetischen Material ausgebildeten Ankerelement, bedeckt. Insbesondere ist der eingekapselte Permanentmagnet, vorzugsweise in einer senkrechten Schnittansicht gesehen, zumindest zu zwei Seiten, vorzugsweise zumindest zu drei Seiten, bevorzugt genau zu drei Seiten von dem Ankerelement begrenzt. Insbesondere ist die Gesamtheit der mit dem Ankerelement gekoppelten Permanentmagnete, vorzugsweise in einer senkrechten Schnittansicht gesehen, zumindest zu drei, bevorzugt genau zu drei, Seiten von dem Ankerelement begrenzt. Die Axialrichtung verläuft insbesondere zentral durch den Magnetaktor, die Magnetspule und/oder das Ankerelement. Insbesondere bildet die Axialrichtung eine Rotationssymmetrieachse des Permanentmagneten und/oder des Ankerelements aus. Insbesondere ist der von dem Ankerelement eingekapselte Permanentmagnet zumindest zu einer Seite des Permanentmagneten frei von einer Bedeckung durch das Ankerelement.

Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass der Permanentmagnet in einer Radialrichtung des Ankerelements, insbesondere in einer radial nach außen zeigenden Radialrichtung des Ankerelements, eine Oberfläche des Ankerelements ausbildet. Insbesondere können dadurch vorteilhafte Eigenschaften hinsichtlich einer Effizienz, insbesondere eine Energieeffizienz, erreicht werden. Vorteilhaft kann ein Abstand zwischen der Magnetspule und dem Permanentmagnet möglichst gering gehalten werden. Dadurch kann vorteilhaft eine besonders gute Kraftübertragung des Magnetfelds der Magnetspule auf das Ankerelement und/oder eine besonders vorteilhafte Kopplung der Magnetfelder der Magnetspule und des Permanentmagneten erreicht werden. Zudem kann vorteilhaft eine hohe Bauraumeffizienz erreicht werden. Die Radialrichtung des Ankerelements erstreckt sich insbesondere senkrecht zu der Axialrichtung des Ankerelements. Insbesondere bildet das Ankerelement eine Ausnehmung aus, welche vorzugswiese als eine Art Nische oder Rille ausgebildet ist, die insbesondere umlaufend um das Ankerelement ausgebildet ist, und welche vorzugsweise dazu vorgesehen ist, zumindest den Permanentmagnet aufzunehmen. Bevorzugt ist die Ausnehmung dazu vorgesehen, zumindest einen weiteren, besonders bevorzugt genau einen weiteren Permanentmagneten, aufzunehmen. Insbesondere bildet die Ausnehmung einen Aufnahmebereich für die Permanentmagnete aus.

Wenn der Permanentmagnet radial magnetisiert ist, kann eine besonders vorteilhafte Kopplung der Magnetfelder der Magnetspule und des Permanentmagneten erreicht werden. Vorteilhaft kann eine besonders gute und/oder effektive Steuerung einer Bewegung des Ankerelements und/oder einer durch das Ankerelement erzeugten Schwingungstilgung ermöglicht werden. Insbesondere ist der Permanentmagnet zumindest im Wesentlichen ringförmig ausgebildet. Magnetische Pole eines radial magnetisierten, insbesondere ringförmigen, Permanentmagnet sind insbesondere auf in Radialrichtung des Permanentmagneten gegenüberliegenden Seiten des Permanentmagneten angeordnet. Insbesondere erstreckt sich ein erster magnetischer Pol des Permanentmagneten in Umfangsrichtung des Permanentmagneten entlang einer radial außenliegenden Seite des Permanentmagneten. Insbesondere erstreckt sich ein zweiter magnetischer Pol des Permanentmagneten in Umfangsrichtung des Permanentmagneten entlang einer radial innenliegenden Seite des Permanentmagneten.

Zudem wird vorgeschlagen, dass die Ankervorrichtung zumindest einen, insbesondere genau einen, weiteren von dem Ankerelement in der Axialrichtung des Ankerelements eingekapselten Permanentmagnet aufweist, welcher abgesehen von einer im Vergleich mit dem Permanentmagneten umgedrehten radialen Magnetisierung, zumindest im Wesentlichen identisch zu dem Permanentmagnet ausgebildet ist. Insbesondere können dadurch vorteilhafte Eigenschaften hinsichtlich einer Effizienz, insbesondere eine Energieeffizienz, erreicht werden. Vorteilhaft kann eine besonders gute Kraftübertragung des Magnetfelds der Magnetspule auf das Ankerelement und/oder eine besonders vorteilhafte Kopplung der Magnetfelder der Magnetspule und des Permanentmagneten erreicht werden. Zudem kann vorteilhaft eine hohe Bauraumeffizienz erreicht werden. Insbesondere sind der Permanentmagnet und der weitere Permanentmagnet gemeinsam von dem Ankerelement eingekapselt. Insbesondere sind der Permanentmagnet und der weitere Permanentmagnet eng benachbart, vorzugsweise sich gegenseitig in der Axialrichtung berührend, an dem Ankerelement angeordnet. Der weitere Permanentmagnet ist insbesondere radial magnetisiert. Die zwei Permanentmagnete sind insbesondere derart zueinander angeordnet, dass sie in der Axialrichtung frei von zwischengeschalteten weiteren Permanentmagneten und/oder frei von zwischengeschalteten Teilbereichen des Ankerelements sind. Insbesondere überlappen sich die beiden Permanentmagnete in der Axialrichtung vollständig. Insbesondere sind die beiden Permanentmagnete frei von einem gegenseitigen Versatz, insbesondere senkrecht zu der Axialrichtung. Es ist denkbar, dass die Aktorvorrichtung mehr als zwei, insbesondere umgekehrt radial polarisierte, Permanentmagnete aufweist, wobei jedoch die Ausgestaltung mit genau zwei Permanentmagneten bevorzugt ist. Unter der Wendung "zumindest im Wesentlichen identisch" soll insbesondere abgesehen von Fertigungstoleranzen identisch, vorzugsweise mit abgesehen von Fertigungstoleranzen identischen Außenmaßen, verstanden werden. Unter einer umgedrehten radialen Magnetisierung soll insbesondere verstanden werden, dass ein Bereich, welcher einen magnetischen Nordpol des ersten Permanentmagneten ausbildet in dem zweiten Permanentmagneten einen magnetischen Südpol ausbildet und umgekehrt.

Des Weiteren wird vorgeschlagen, dass die Aktorvorrichtung zumindest zwei Magnetspulen aufweist, deren Spulenwicklungen in Umfangsrichtung des Ankerelements um das Ankerelement verlaufen. Insbesondere können dadurch vorteilhafte Eigenschaften hinsichtlich einer Effizienz, insbesondere eine Energieeffizienz, erreicht werden. Vorteilhaft kann eine besonders gute Kraftübertragung des Magnetfelds der Magnetspule auf das Ankerelement und/oder eine besonders vorteilhafte Kopplung der Magnetfelder der Magnetspule und des Permanentmagneten erreicht werden. Vorteilhaft kann durch zwei Magnetspulen eine besonders gute Performance der Aktorvorrichtung, insbesondere eine besonders effektive Schwingungstilgung, erreicht werden. Zudem kann vorteilhaft eine hohe Bauraumeffizienz erreicht werden. Insbesondere ist die erste Magnetspule, insbesondere zumindest in einem Ruhezustand des Magnetaktors, entlang der Axialrichtung auf Höhe des ersten Permanentmagnets angeordnet. Insbesondere ist die zweite Magnetspule, insbesondere zumindest in einem Ruhezustand des Magnetaktors, entlang der Axialrichtung auf Höhe des zweiten Permanentmagnets angeordnet.

Wenn die Spulenwicklungen der zwei Magnetspulen einen zueinander entgegengesetzten Wickelsinn aufweisen, kann vorteilhaft eine besonders hohe Effizienz und/oder eine besonders gute Performance der Aktorvorrichtung erreicht werden. Insbesondere weisen die beiden Magnetspulen eine gemeinsame Stromversorgung auf. Vorteilhaft werden dadurch bei einer gleichzeitigen Bestromung der beiden Magnetspulen mittels der gemeinsamen Stromversorgung unterschiedlich ausgerichtete Magnetfelder durch die beiden Magnetspulen erzeugt. Vorteilhaft kann auf eine separate Stromversorgung der zwei Magnetspulen verzichtet werden. Dadurch kann vorteilhaft eine hohe Energieeffizienz und eine hohe Bauraumeffizienz erreicht werden. Insbesondere entsteht bei einer Bestromung der beiden Magnetspulen durch den entgegengesetzten Wickelsinn ein Magnetfeld, welches den Anker anregt sich so auszulenken, dass an den jeweiligen Übergängen der Magnetspulen zu in Axialrichtung relativ zu den Magnetspulen angeordneten Magnetjochen günstige magnetische Übergänge in einen magnetischen Nordpol oder in einen magnetischen Südpol entstehen, so dass der jeweilige Permanentmagnet aus dem Bereich der entsprechenden Magnetjoche herausgeschoben wird. Vorteilhaft lassen sich dadurch, insbesondere mittels eines Umpolens der Stromversorgung, sehr dynamisch hohe Axialkräfte aufbauen. Insbesondere sind die Spulenwicklungen der beiden Magnetspulen elektrisch miteinander verbunden, vorzugsweise elektrisch seriell oder elektrisch parallel miteinander verschaltet. Alternativ oder zusätzlich ist denkbar, dass die Aktorvorrichtung mehr als zwei Magnetspulen aufweist. Vorteilhaft entspricht eine Anzahl an Magnetspulen der Aktorvorrichtung einer Anzahl an in dem Ankerelement eingekapselten Permanentmagneten.

Weiterhin wird vorgeschlagen, dass die Aktorvorrichtung zumindest ein Magnetjoch aufweist, welches in der Axialrichtung des Ankerelements gesehen zwischen den zwei Magnetspulen angeordnet ist. Insbesondere können dadurch vorteilhafte Eigenschaften hinsichtlich einer Effizienz, insbesondere eine Energieeffizienz, erreicht werden. Vorteilhaft kann eine besonders gute Kraftübertragung des Magnetfelds der Magnetspule auf das Ankerelement und/oder eine besonders vorteilhafte Kopplung der Magnetfelder der Magnetspule und des Permanentmagneten erreicht werden. Insbesondere umfasst die Aktorvorrichtung einen zumindest zu einem Großteil geschlossenen Magnetkreis. Unter einem "Großteil" soll in diesem Zusammenhang insbesondere zumindest 66 %, vorzugswiese zumindest 75 %, vorteilhaft zumindest 80 %, bevorzugt zumindest 90 % und besonders bevorzugt höchstens 90 % verstanden werden. Insbesondere ist der Magnetkreis von magnetfeldführenden Elementen, insbesondere Eisenteilen gebildet. Insbesondere bildet der Magnetkreis einen Magnetkern einer der Magnetspulen, vorzugsweise die Magnetkerne der Magnetspulen aus. Insbesondere ist der Magnetkreis von feststehenden und von beweglichen Teilen, insbesondere Eisenteilen, gebildet. Insbesondere bildet das Ankerelement einen beweglichen Teil, insbesondere ein bewegliches Eisenteil, des Magnetkreises aus. Insbesondere bildet ein Magnetjoch einen unbeweglichen Teil, insbesondere ein unbewegliches Eisenteil, des Magnetkreises aus. Vorzugsweise umfasst der Eisenkreis eine Mehrzahl an Magnetjochen. Insbesondere umfasst jede Magnetspule der Aktorvorrichtung einen zu einem Großteil geschlossenen Magnetkreis, insbesondere einen Magnetkern. Insbesondere kann ein Magnetjoch Teil mehrerer Magnetkreise und/oder Magnetkerne sein. Insbesondere ist das Magnetjoch mittig zwischen den Magnetspulen angeordnet. Insbesondere füllt das Magnetjoch einen Zwischenraum zwischen den Magnetspulen zumindest zu einem Großteil, vorzugsweise vollständig, aus.

Zusätzlich wird vorgeschlagen, dass die Aktorvorrichtung zumindest ein weiteres Magnetjoch aufweist, welches in der Axialrichtung des Ankerelements gesehen, oberhalb oder unterhalb der zwei Magnetspulen angeordnet ist. Insbesondere können dadurch vorteilhafte Eigenschaften hinsichtlich einer Effizienz, insbesondere eine Energieeffizienz, erreicht werden. Vorteilhaft kann eine besonders gute Kraftübertragung des Magnetfelds der Magnetspule auf das Ankerelement und/oder eine besonders vorteilhafte Kopplung der Magnetfelder der Magnetspule und des Permanentmagneten erreicht werden. Bevorzugt umfasst die Aktorvorrichtung zumindest zwei weitere Magnetjoche, wobei ein erstes weiteres Magnetjoch oberhalb der zwei Magnetspulen angeordnet ist und ein zweites weiteres Magnetjoch unterhalb der zwei Magnetspulen angeordnet ist. Insbesondere sind die Magnetjoche dazu vorgesehen, bei einer Bestromung der zugehörigen Magnetspulen an deren Enden jeweils einen Magnetpol auszubilden. Insbesondere sind die Magnetspulen dazu vorgesehen, derart bestromt zu werden, dass sich an den Enden der Magnetjoche jeweils ein Magnetpol ausbildet, welcher eine Polarität aufweist, die verschieden ist von der Polarität des jeweiligen an dem jeweiligen Magnetjoch angrenzenden Permanentmagneten. Insbesondere bildet jedes der drei Magnetjoche eine/n senkrecht zu der Axialrichtung des Ankerelements und/oder der Magnetspule verlaufende/n Steg/Scheibe aus. Insbesondere umfasst die Aktorvorrichtung drei Magnetjoche, zwei entgegengesetzte Magnetspulen und/oder ein Ankerelement mit zwei Permanentmagneten welche in zumindest einem Betriebszustand gemeinsam mit den die Einkapselung ausbildenden Teilen des Ankerelements insgesamt vier Magnetpole ausbilden. Insbesondere bilden davon die Permanentmagnete zwei Magnetpole sowie die die Einkapselung ausbildenden Teilen des Ankerelements zwei weitere Magnetpole aus.

Weiterhin wird vorgeschlagen, dass zumindest in einem Ruhebetriebszustand die Permanentmagnete derart relativ zu den Magnetjochen angeordnet sind, dass ein Übergang von einem Nordpol eines der Permanentmagnete zu einem Südpol des anderen Permanentmagnets und/oder ein Übergang von einem Magnetpol eines der Permanentmagnete zu einem die Einkapselung ausbildenden, insbesondere weichmagnetischen, Teils des Ankerelements entlang der Axialrichtung des Ankerelements gesehen auf einer Höhe des jeweiligen nächstliegenden Magnetjochs, insbesondere eines senkrecht zu der Axialrichtung verlaufenden Stegs des jeweiligen nächstliegenden Magnetjochs und/oder einer sich senkrecht zu der Axialrichtung erstreckenden Scheibe des jeweiligen nächstliegenden Magnetjochs, angeordnet ist. Insbesondere können dadurch vorteilhafte Eigenschaften hinsichtlich einer Effizienz, insbesondere eine Energieeffizienz, erreicht werden. Vorteilhaft kann eine besonders gute Performance der Aktorvorrichtung erreicht werden. Unter dem "Ruhebetriebszustand" soll insbesondere ein Betriebszustand verstanden werden in dem die Magnetspulen nicht bestromt sind.

Ferner wird vorgeschlagen, dass der Übergang des Magnetpols eines der Permanentmagnete zu einem der die Einkapselung ausbildenden Teile des Ankerelements, vorzugsweise ein außenliegendes Ende eines der Permanentmagnete, in der Axialrichtung des Ankerelements, insbesondere in eine zu dem Permanentmagnet hinzeigende Richtung, relativ zu einer Mitte des nächstliegenden Magnetjochs versetzt angeordnet ist. Insbesondere können dadurch vorteilhafte Eigenschaften hinsichtlich einer Effizienz, insbesondere eine Energieeffizienz, erreicht werden. Vorteilhaft kann dadurch eine durch eine Bewegung des Ankerelements erreichbare Kraft erhöht und/oder maximiert werden. Insbesondere beträgt der Versatz zumindest 3 %, vorzugsweise zumindest 5 %, vorteilhaft zumindest 7 % besonders vorteilhaft zumindest 10 %, bevorzugt zumindest 12 % und besonders bevorzugt zumindest 15 % einer Gesamterstreckung der die Einkapselung ausbildenden Teile des Ankerelements in der Axialrichtung.

Zusätzlich wird vorgeschlagen, dass der Permanentmagnet derart in dem Ankerelement angeordnet ist, dass an einem in der Axialrichtung des Ankerelements außenliegenden Ende des Permanentmagnets die Magnetfeldlinien eines in der Radialrichtung des Ankerelements innenliegenden Magnetpols des Permanentmagnets durch ein Material eines die Einkapselung ausbildenden Teils des Ankerelements zurück nach außen zu dem Magnetjoch geführt sind. Insbesondere können dadurch vorteilhafte Eigenschaften hinsichtlich einer Effizienz, insbesondere eine Energieeffizienz, erreicht werden. Vorteilhaft kann eine besonders vorteilhafte Kopplung der Magnetfelder der Magnetspule und des Permanentmagneten erreicht werden. Insbesondere bilden sich dadurch vorteilhaft an den dem Ankerelement zugewandten Enden der Magnetjoche, insbesondere der steg- und/oder scheibenförmigen Teile der Magnetjoche jeweils die endseitigen Magnetpole der nächstliegenden Magnetspulen aus.

Außerdem wird vorgeschlagen, dass der Permanentmagnet in einer Radialrichtung des Ankerelements relativ zu dem die Einkapselung ausbildenden Teil des Ankerelements in Richtung eines Zentrums des Ankerelements nach innen versetzt ist. Dadurch kann vorteilhaft sichergestellt werden, dass bei einem Block, insbesondere bei einem Anschlagen des Ankerelements an dem Magnetjoch durch eine Radialbewegung des Ankerelements, ein Lastpfad von dem Magnetjoch über den die Einkapselung ausbildenden Teils des Ankerelements verläuft und somit vorteilhaft nicht über den Permanentmagnet. Dadurch kann vorteilhaft eine besonders hohe Stabilität und/oder Lebensdauer und somit Effizienz der Aktorvorrichtung erreicht werden. Insbesondere beträgt der Versatz des Permanentmagneten in der Ausnehmung des Ankerelements zumindest 3 %, vorzugsweise zumindest 5 %, vorteilhaft zumindest 7 % besonders vorteilhaft zumindest 10 %, bevorzugt zumindest 12 % und besonders bevorzugt zumindest 15 % einer Gesamterstreckung des Permanentmagneten in der Radialrichtung des Ankerelements und/oder des Permanentmagneten. Insbesondere weist der Permanentmagnet einen außenliegenden Außendurchmesser, welcher zumindest um den Versatz kleiner ist als ein außenliegender Außendurchmesser des die Einkapselung ausbildenden Teil des Ankerelements. Der die Einkapselung ausbildende Teils des Ankerelements ist insbesondere als eine sich in die Radialrichtung des Ankerelements erstreckende steg- und/oder scheibenförmige Ausstülpung des Ankerelements ausgebildet. Die Ausstülpung des Ankerelements weißt insbesondere den maximalen außenliegenden Außendurchmesser des Ankerelements auf. Unter einem "Zentrum des Ankerelements" soll insbesondere ein Schwerpunkt des Ankerelements und/oder eine Rotationssymmetrieachse des Ankerelements verstanden werden.

Außerdem wird vorgeschlagen, dass das Ankerelement den Aufnahmebereich aufweist, welcher dazu vorgesehen ist, zumindest den Permanentmagnet aufzunehmen, wobei der Aufnahmebereich radial abgesetzte Erhebungen, insbesondere Rillen und/oder Kuppen, aufweist. Dadurch kann vorteilhaft eine hohe Effizienz, insbesondere Montageeffizienz, erreicht werden. Insbesondere indem zwischen den radial abgesetzten Erhebungen ein Spalt zur Aufnahme eines Klebstoffes entsteht, welcher vorzugsweise verhindert, dass der Klebstoff bei der Montage durch die Anzugskräfte des Permanentmagneten aus dem Aufnahmebereich und/oder aus einem Bereich zwischen Permanentmagnet und Ankerelement verdrängt wird, insbesondere bevor der Klebstoff vollständig ausgehärtet ist. Zudem kann vorteilhaft eine möglichst kurze Toleranzkette zu dem außenliegenden Außendurchmesser des Permanentmagneten erreicht werden, wodurch vorteilhaft eine besonders hohe Genauigkeit und/oder eine besonders geringe Asymmetrie des Ankerelements erreicht werden kann.

Erfindungsgemäß weist das Ankerelement in seinem Inneren zumindest einen Hohlraum auf, welcher an einer Innenwand zumindest eine

Ausnehmung, insbesondere eine rillenförmige Einkerbung, aufweist. Durch den Hohlraum kann vorteilhaft ein besonders leichtbauendes Ankerelement erhalten werden, welches insbesondere eine Aktorvorrichtung mit einer besonders hohen Dynamik ermöglicht. Durch die Ausnehmung der Innenwand des Ankerelements kann insbesondere eine besonders vorteilhafte Magnetfeldführung innerhalb des Ankerelements erreicht werden. Vorteilhaft kann bei einer geeigneten Anordnung der Ausnehmung eine Aufspaltung des magnetischen Flusspfades des Permanentmagneten in einen Teil, welcher in den weiteren Permanentmagneten verläuft und einen Teil der in die Ausstülpung des Ankerelements geleitet wird, erreicht werden. Dadurch kann vorteilhaft eine Effizienz, insbesondere eine Energieeffizienz, der Aktorvorrichtung erhöht werden. Insbesondere weist der Hohlraum an der Innenwand zumindest eine zweite Ausnehmung, insbesondere eine zweite rillenförmige Einkerbung, auf. Insbesondere ist die zweite Ausnehmung der Innenwand des Ankerelements zumindest im Wesentlichen identisch zu der Ausnehmung der Innenwand des Ankerelements ausgebildet. Insbesondere weist der Hohlraum des Ankerelements einen maximalen Durchmesser auf, welcher zumindest 30 %, vorteilhaft zumindest 40 %, besonders vorteilhaft zumindest 50 %, vorzugsweise zumindest 60 %, bevorzugt zumindest 70 % und besonders bevorzugt höchstens 80 % eines maximalen Außendurchmessers des Ankerelements entspricht. Insbesondere umso größer der Hohlraum ist umso leichtbauender wird das Ankerelement, jedoch auf Kosten einer Stabilität.

Wenn die Ausnehmung der Innenwand des Ankerelements, insbesondere die rillenförmige Einkerbung, entlang der Axialrichtung des Ankerelements, insbesondere zumindest in dem Ruhebetriebszustand, zumindest im Wesentlichen mittig auf einer Höhe des Permanentmagnets angeordnet ist, kann eine besonders vorteilhafte Aufspaltung des Magnetfelds, insbesondere des magnetischen Flusses und/oder der Magnetfeldlinien, innerhalb des Ankerelements erreicht werden. Dadurch kann vorteilhaft eine Effizienz, insbesondere eine Energieeffizienz, der Aktorvorrichtung erhöht werden. Insbesondere ist die zweite Ausnehmung der Innenwand des Ankerelements, insbesondere die zweite rillenförmige Einkerbung, insbesondere zumindest in dem Ruhebetriebszustand, zumindest im Wesentlichen mittig auf einer Höhe des zweiten Permanentmagnets angeordnet. Unter "im Wesentlichen mittigen" Anordnungen sollen insbesondere alle Anordnungen verstanden werden, welche in der Axialrichtung höchstens um 10 %, vorzugsweise höchstens um 5 %, bevorzugt höchstens um 3 % und besonders bevorzugt höchstens um 1 % einer gesamten Axialerstreckung des Permanentmagneten von einer genau mittigen Anordnung abweichen.

Weiterhin wird vorgeschlagen, dass die Ausnehmung der Innenwand des Ankerelements zumindest eine Seitenwand aufweist, welche relativ zu der Axialrichtung des Ankerelements und/oder relativ zu einer Radialrichtung des Ankerelements angewinkelt ist. Dadurch kann vorteilhaft eine besonders gezielte Führung des Magnetfelds, insbesondere des magnetischen Flusses und/oder der Magnetfeldlinien, innerhalb des Ankerelements erreicht werden. Dadurch kann vorteilhaft eine besonders hohe Effizienz, insbesondere Energieeffizienz, erreicht werden. Insbesondere beträgt ein Winkel der von der Seitenwand der Ausnehmung der Innenwand des Ankerelements und der Radialrichtung des Ankerelements aufgespannt wird zumindest 5°, vorzugsweise zumindest 10°, vorteilhaft zumindest 20°, besonders vorteilhaft zumindest 30°, bevorzugt zumindest 40° und besonders bevorzugt höchstens 60°. Beispielsweise beträgt der Winkel der von der Seitenwand der Ausnehmung der Innenwand des Ankerelements und der Radialrichtung des Ankerelements aufgespannt wird genau 30°. Insbesondere sind die Beträge der Winkel, den die beiden Seitenwände der Ausnehmung der Innenwand des Ankerelements jeweils mit der Radialrichtung des Ankerelements einschließen zumindest im Wesentlichen identisch, vorzugsweise zumindest im Wesentlichen gleich groß. Insbesondere sind die Öffnungsrichtungen der Winkel, den die beiden Seitenwände der Ausnehmung der Innenwand des Ankerelements jeweils mit der Radialrichtung des Ankerelements einschließen, entgegengesetzt zueinander. Die Ausnehmungen der Innenwand des Ankerelements sind insbesondere als Freidrehungen ausgebildet.

Des Weiteren wird vorgeschlagen, dass die Aktorvorrichtung zumindest ein Federelement, insbesondere eine Tellerfeder, umfasst, welche/s zu einer radialen Lagerung des Ankerelements vorgesehen ist. Dadurch kann vorteilhaft eine, insbesondere unerwünschte, Schwingung des Ankerelements in die Radialrichtung abgefedert werden. Dadurch kann vorteilhaft eine hohe Betriebssicherheit erreicht werden.

Zusätzlich wird vorgeschlagen, dass die Aktorvorrichtung zumindest ein Anschlagselement aufweist, welches dazu vorgesehen ist, eine Bewegung des Ankerelements entlang der Axialrichtung zu begrenzen. Dadurch kann vorteilhaft ein Bewegungsbereich des Ankerelements eingeschränkt werden, wodurch insbesondere eine hohe Betriebssicherheit erreicht werden kann. Das Anschlagselement ist insbesondere als ein Teil eines Gehäuses der Aktorvorrichtung und/oder des Magnetaktors ausgebildet und/oder an dem Gehäuse angeordnet. Alternativ kann das Anschlagelement als ein Teil einer Halterung des Federelements ausgebildet sein und/oder an dem Federelement angeordnet sein. Das Anschlagselement ist insbesondere als ein ortsfestes, stabiles Flächenelement ausgebildet.

Außerdem wird vorgeschlagen, dass die Aktorvorrichtung zumindest ein Dämpfungselement aufweist, welches dazu vorgesehen ist, einen Anschlag des Ankerelements an das Anschlagselement abzudämpfen. Dadurch kann vorteilhaft eine Beschädigung des Ankerelements oder des Anschlagselements verhindert werden, wodurch vorteilhaft eine hohe Betriebssicherheit und/oder eine hohe Lebensdauer der Aktorvorrichtung erreicht werden kann. Insbesondere ist das Dämpfungselement zumindest teilweise aus einem elastischen Werkstoff ausgebildet, beispielsweise aus einem Kunststoff, wie einem Elastomer oder einem Gummi. Alternativ oder zusätzlich kann das Anschlagselement auch zumindest teilweise aus einem Metall mit guten Dämpfungseigenschaften ausgebildet sein und/oder eine Feder, beispielsweise eine Spiraldruckfeder, umfassen. Das Dämpfungselement kann insbesondere zumindest teilweise in das Gehäuse der Aktorvorrichtung integriert und/oder an das Gehäuse der Aktorvorrichtung anmontiert sein. Alternativ kann das Dämpfungselement zumindest teilweise in die Halterung des Federelements integriert und/oder an dem Federelement anmontiert sein. Alternativ oder zusätzlich kann das Dämpfungselement und/oder ein weiteres Dämpfungselement zumindest teilweise in dem Ankerelement integriert oder an das Ankerelement anmontiert sein.

Ferner wird ein Magnetaktor mit der Aktorvorrichtung zur aktiven Schwingungsreduzierung, -dämpfung und/oder -tilgung vorgeschlagen. Dadurch können vorteilhafte Eigenschaften hinsichtlich einer Effizienz des Magnetaktors erreicht werden. Unter einem "Magnetaktor" soll insbesondere eine antriebstechnische Baueinheit verstanden werden, die ausgelöst durch ein elektrisches Signal ein Magnetfeld erzeugt, welches eine mechanische Bewegung des Ankerelements bewirkt.

Außerdem wird ein schwingungsgedämpftes Motorlager mit dem Magnetaktor vorgeschlagen. Dadurch kann vorteilhaft eine besonders effiziente Schwingungsdämpfung eines Motors erreicht werden.

Zudem wird ein Verfahren mit der Aktorvorrichtung vorgeschlagen.

Die erfindungsgemäße Aktorvorrichtung, der erfindungsgemäße Magnetaktor, das erfindungsgemäße Motorlager und das erfindungsgemäße Verfahren sollen hierbei nicht auf die oben beschriebene Anwendung und Ausführungsform beschränkt sein. Insbesondere kann die erfindungsgemäße Aktorvorrichtung, der erfindungsgemäße Magnetaktor, das erfindungsgemäße Motorlager und das erfindungsgemäße Verfahren zu einer Erfüllung einer hierin beschriebenen Funktionsweise eine von einer hierin genannten Anzahl von einzelnen Elementen, Bauteilen, Verfahrensschritten und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Schnittansicht eines Magnetaktors mit einer Aktorvorrichtung,
- Fig. 2: eine schematische Teilansicht der Aktorvorrichtung mit angedeuteten Magnetfeldlinien,
- Fig. 3: eine Vergrößerung eines Teils der schematischen Teilansicht der Aktorvorrichtung und
- Fig. 4: ein Ablaufdiagramm eines Verfahrens mit der Aktorvorrichtung.

### Beschreibung des Ausführungsbeispiels

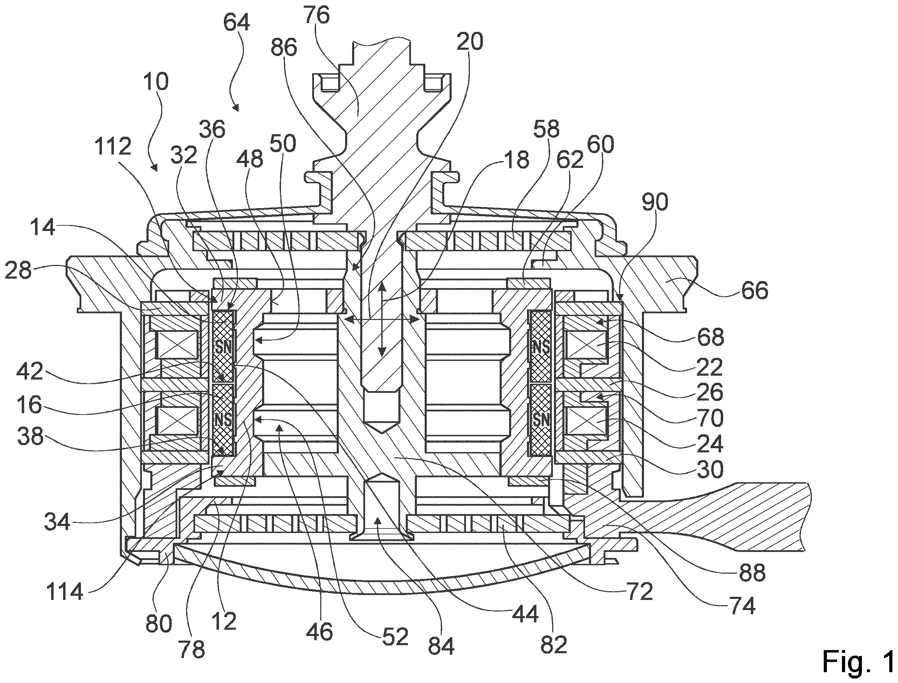

Fig. 1 zeigt einen Magnetaktor 64. Der Magnetaktor 64 bildet einen Teil eines schwingungsgedämpften Motorlagers (nicht gezeigt) aus. Der Magnetaktor 64 ist umspritzt ausgebildet. Der Magnetaktor 64 weist eine Umspritzung 74 auf. Durch die Umspritzung 74 ist der Magnetaktor 64 vorteilhaft nach außen abgedichtet. Der Magnetaktor 64 weist eine Aktorvorrichtung 10 auf. Die Aktorvorrichtung 10 weist ein Gehäuse 66 auf. Die Aktorvorrichtung 10 ist zu einer aktiven Schwingungsreduzierung, -dämpfung und/oder -tilgung von durch eine externe Vorrichtung erzeugten Schwingungen vorgesehen. Die Aktorvorrichtung 10 weist ein Ankerelement 12 auf. Das Ankerelement 12 ist beweglich gelagert. Das Ankerelement 12 ist zumindest relativ zu dem Gehäuse 66 beweglich gelagert. Das Ankerelement 12 ist innerhalb des Gehäuses 66 angeordnet. Das Ankerelement 12 ist rotationssymmetrisch ausgebildet. Alternativ kann das Ankerelement 12 auch zumindest leichte Abweichungen von einer perfekten Rotationssymmetrie aufweisen. Das Ankerelement 12 weist in seinem Inneren einen Hohlraum 46 auf. Der Hohlraum 46 ist entlang einer Axialrichtung 18 des Ankerelements 12 durch das Ankerelement 12 durchgehend ausgebildet. Der Hohlraum 46 dient zu einer Gewichtsreduzierung des Ankerelements 12. Der Hohlraum 46 dient zu einer Erhöhung einer Dynamik des Ankerelements 12. Das Ankerelement 12 ist aus einem weichmagnetischen Stahl ausgebildet. Das Ankerelement 12 ist mit einer Achse 72 gekoppelt. Die Achse 72 ist wiederum mit einer Kundenschnittstelle 76 gekoppelt. Die Kundenschnittstelle 76 ist dazu vorgesehen eine Verbindung mit dem Motor oder mit dem Motorlager herzustellen, dessen Schwingungen durch den Magnetaktor 64 gedämpft werden sollen.

Die Aktorvorrichtung 10 weist einen Permanentmagnet 14 auf. Die Aktorvorrichtung 10 weist einen weiteren Permanentmagnet 16 auf. Der Permanentmagnet 14 und der weitere Permanentmagnet 16 sind mit dem Ankerelement 12 gekoppelt. Der Permanentmagnet 14 und der weitere Permanentmagnet 16 sind unlösbar mit dem Ankerelement 12 gekoppelt. Der Permanentmagnet 14 und der weitere Permanentmagnet 16 sind mit einer radialen Außenseite des Ankerelement 12 gekoppelt. Der Permanentmagnet 14 und der weitere Permanentmagnet 16 verlaufen in Umfangsrichtung um das Ankerelement 12. Der Permanentmagnet 14 und der weitere Permanentmagnet 16 verlaufen ringförmig um das Ankerelement 12. Der Permanentmagnet 14 ist radial magnetisiert. Der weitere Permanentmagnet 16 ist radial magnetisiert. Der Permanentmagnet 14 und der weitere Permanentmagnet 16 weisen umgedrehte radiale Polarisierungen auf. Der weitere Permanentmagnet 16 ist abgesehen von der im Vergleich mit dem Permanentmagnet 14 umgedrehten radialen Magnetisierung zumindest im Wesentlichen identisch zu dem Permanentmagnet 14 ausgebildet.

In dem in der Fig. 1 dargestellten Fall weist der Permanentmagnet 14 einen in einer Radialrichtung 20 außenliegenden magnetischen Südpol S und einen in der Radialrichtung 20 innenliegenden magnetischen Nordpol N auf, während der weitere Permanentmagnet 16 einen in der Radialrichtung 20 außenliegenden magnetischen Nordpol N und einen in der Radialrichtung 20 innenliegenden magnetischen Südpol S aufweist. Dies kann ohne Beeinträchtigung der Funktionsfähigkeit der Aktorvorrichtung 10 auch jeweils umgekehrt sein. Die Permanentmagnete 14, 16 sind direkt aneinander angrenzend entlang der Axialrichtung 18 des Ankerelements 12 angeordnet. Die Permanentmagnete 14, 16 sind entlang der Axialrichtung 18 versatzfrei zueinander ausgerichtet. Die Axialrichtung 18 des Ankerelements 12 verläuft parallel zu einer vorgesehenen Hauptbewegungsachse des Ankerelements 12 in der Aktorvorrichtung 10.

Der Permanentmagnet 14 ist in der Axialrichtung 18 des Ankerelements 12 von dem Ankerelement 12 zu zwei Seiten eingekapselt. Der weitere Permanentmagnet 16 ist in der Axialrichtung 18 des Ankerelements 12 von dem Ankerelement 12 zu zwei Seiten eingekapselt. Die beiden Permanentmagnete 14, 16 sind gemeinsam in der Axialrichtung 18 des Ankerelements 12 von dem Ankerelement 12 zu drei Seiten eingekapselt. Das Ankerelement 12 bildet einen Aufnahmebereich 42 aus. Der Aufnahmebereich 42 ist dazu vorgesehen die Permanentmagnete 14, 16 aufzunehmen. Der Aufnahmebereich 42 ist dazu vorgesehen, die Permanentmagnete 14, 16 zu drei Seiten einzukapseln. Der Permanentmagnet 14 und der weitere Permanentmagnet 16 bilden in der Radialrichtung 20 des Ankerelements 12 eine Oberfläche des Ankerelements 12 aus. Das Ankerelement 12 begrenzt die Permanentmagnete 14, 16 in der Axialrichtung 18 nach oben. Ein erstes Ende 112 des Ankerelements 12 begrenzt die Permanentmagnete 14, 16 in der Axialrichtung 18 nach oben. Ein die Permanentmagnete 14, 16 einkapselnder Teil 32 des Ankerelements 12 begrenzt die Permanentmagnete 14, 16 in der Axialrichtung 18 nach oben. Das Ankerelement 12 begrenzt die Permanentmagnete 14, 16 in der Axialrichtung 18 nach unten. Ein zweites Ende 114 des Ankerelements 12 begrenzt die Permanentmagnete 14, 16 in der Axialrichtung 18 nach unten. Ein die Permanentmagnete 14, 16 einkapselnder Teil 34 des Ankerelements 12 begrenzt die Permanentmagnete 14, 16 in der Axialrichtung 18 nach unten. Die Enden 112, 114 des Ankerelements 12 sind als radial nach außen vorstehende Ausstülpungen und/oder Fortsätze des Ankerelements 12 ausgebildet. Die die Permanentmagnete 14, 16 einkapselnden Teile 32, 34 des Ankerelements 12 sind als radial nach außen vorstehende Ausstülpungen und/oder Fortsätze des Ankerelements 12 ausgebildet. Die Enden 112, 114 des Ankerelements 12 schließen das Ankerelement 12 in der Axialrichtung 18 nach oben und nach unten ab.

Die Aktorvorrichtung 10 weist eine erste Magnetspule 22 auf. Die Aktorvorrichtung 10 weist eine zweite Magnetspule 24 auf. Die Magnetspulen 22, 24 weisen jeweils einen Spulenkörper 68, 70 auf. Die Magnetspulen 22, 24 umfassen Spulenwicklungen (nicht gezeigt). Die Spulenwicklungen der Magnetspulen 22, 24 sind jeweils auf die zugehörigen Spulenkörper 68, 70 gewickelt. Die Spulenwicklungen der Magnetspulen 22, 24 verlaufen in Umfangsrichtung des Ankerelements 12 um das Ankerelement 12 herum. Die Spulenwicklungen der zwei Magnetspulen 22, 24 weisen einen zueinander entgegengesetzten Wickelsinn auf. Jeweils eine der Magnetspulen 22, 24 ist in einem Ruhebetriebszustand der Aktorvorrichtung 10 entlang der Axialrichtung 18 auf Höhe einer der Permanentmagnete 14, 16 angeordnet.

Die Aktorvorrichtung 10 weist einen Magnetkreis 90 auf. Der Magnetkreis 90 ist durch einen Magnetkern ausgebildet. Der Magnetkreis 90 ist als ein Eisenkreis ausgebildet, welcher insbesondere auch Teile aus weichmagnetischem Stahl aufweisen kann. Das Ankerelement 12 bildet einen Teil des Magnetkreises 90 aus. Die Aktorvorrichtung 10 weist ein erstes Magnetjoch 26 auf. Der Magnetkreis 90 weist das erste Magnetjoch 26 auf. Das erste Magnetjoch 26 ist aus Eisen ausgebildet. Das erste Magnetjoch 26 ist dazu vorgesehen, ein Magnetfeld der Magnetspulen 22, 24 zu leiten. Das erste Magnetjoch 26 bildet einen Teil des Magnetkreises 90 aus. Das erste Magnetjoch 26 ist in der Axialrichtung 18 des Ankerelements 12 gesehen zwischen den zwei Magnetspulen 22, 24 angeordnet. Das erste Magnetjoch 26 ist scheibenförmig ausgebildet. Das erste Magnetjoch 26 ist in einem montierten Zustand der Aktorvorrichtung 10 um das Ankerelement 12 umlaufend ausgebildet. Das erste Magnetjoch 26 erstreckt sich in der Radialrichtung 20 nach innen.

Die Aktorvorrichtung 10 weist ein zweites Magnetjoch 28 auf. Der Magnetkreis 90 weist das zweite Magnetjoch 28 auf. Das zweite Magnetjoch 28 ist zumindest im Wesentlichen identisch zu dem ersten Magnetjoch 26 ausgebildet. Das zweite Magnetjoch 28 bildet einen Teil des Magnetkreises 90 aus. Das zweite Magnetjoch 28 ist in der Axialrichtung 18 des Ankerelements 12 gesehen oberhalb der zwei Magnetspulen 22, 24 angeordnet. Die Aktorvorrichtung 10 weist ein drittes Magnetjoch 30 auf. Der Magnetkreis 90 weist das dritte Magnetjoch 30 auf. Das dritte Magnetjoch 30 ist zumindest im Wesentlichen identisch zu dem ersten Magnetjoch 26 ausgebildet. Das dritte Magnetjoch 30 bildet einen Teil des Magnetkreises 90 aus. Das dritte Magnetjoch 30 ist in der Axialrichtung 18 des Ankerelements 12 gesehen unterhalb der zwei Magnetspulen 22, 24 angeordnet.

Über die Verbindung der Achse 72 mit dem Ankerelement 12 können radiale Stöße von der Achse 72 zu dem Ankerelement 12 übertragen werden oder umgekehrt. Die Aktorvorrichtung 10 weist ein unteres Federelement 58 auf. Das untere Federelement 58 ist in der Axialrichtung 18 gesehen mit einem unteren Ende 84 der Achse 72 verbunden. Die Aktorvorrichtung 10 weist ein oberes Federelement 82 auf. Das obere Federelement 82 ist in der Axialrichtung 18 gesehen mit einem, dem unteren Ende 84 der Achse 72 gegenüberliegenden oberen Ende 86 der Achse 72 verbunden. Die Federelemente 58, 82 sind zu einer radialen Lagerung des Ankerelements 12 vorgesehen. Die Federelemente 58, 82 sind zu einer Dämpfung von Bewegungen des Ankerelements 12 in Radialrichtungen 20 des Ankerelements 12 vorgesehen. Die Federelemente 58, 82 sind jeweils als Tellerfedern ausgebildet.

Die Aktorvorrichtung 10 weist ein Anschlagselement 60 auf. Die Aktorvorrichtung 10 weist ein weiteres Anschlagselement 78 auf. Die Anschlagselemente 60, 78 sind dazu vorgesehen, eine Bewegung des Ankerelements 12 entlang der Axialrichtung 18 zu begrenzen. Das obere Anschlagselement 60 ist einstückig mit dem Gehäuse 66 ausgebildet. Das obere Anschlagselement 60 ist als ein scheibenförmiger, sich in die Radialrichtung 20 nach Innen erstreckender Fortsatz des Gehäuses 66 ausgebildet. Das untere Anschlagselement 78 ist einstückig mit einer Federhalterung 80 der Aktorvorrichtung 10, welche zu einer Halterung eines Federelements 58 der Aktorvorrichtung 10 vorgesehen ist, ausgebildet. Das untere Anschlagselement 78 ist als ein scheibenförmiger, sich in die Radialrichtung 20 nach innen erstreckender Fortsatz der Federhalterung 80 ausgebildet. Andere Ausgestaltungen der Anschlagselemente 60, 78 sind jedoch denkbar. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Die Aktorvorrichtung 10 weist Dämpfungselemente 62, 88 auf. Die Dämpfungselemente 62, 88 sind dazu vorgesehen, Anschläge des Ankerelements 12 an die Anschlagselemente 60, 78 abzudämpfen. Die Dämpfungselemente 62, 88 sind aus einem Elastomer ausgebildet. Die Dämpfungselemente 62, 88 sind ringförmig ausgebildet. Andere Ausgestaltungen der Dämpfungselemente 62, 88 sind jedoch denkbar. Die Dämpfungselemente 62, 88 sind jeweils an Seiten des Ankerelements 12 angebracht, welche in der Axialrichtung 18 gesehen eine Oberseite und eine Unterseite des Ankerelements 12 ausbilden. Die Dämpfungselemente 62, 88 sind an dem Ankerelement 12 befestigt. Die Dämpfungselemente 62, 88 sind in der Axialrichtung 18 den Anschlagselementen 60, 78 gegenüberliegend angeordnet. Die Dämpfungselemente 62, 88 überlappen zumindest teilweise in der Axialrichtung 18 mit den Anschlagselementen 60, 78. Die Axialrichtung 18 des Ankerelements 12 verläuft parallel und/oder überlappt mit den Axialrichtungen 18 der Magnetspulen 22, 24 oder der Magnetjoche 26, 28, 30. Die Radialrichtung 20 verläuft senkrecht zu der Axialrichtung 18.

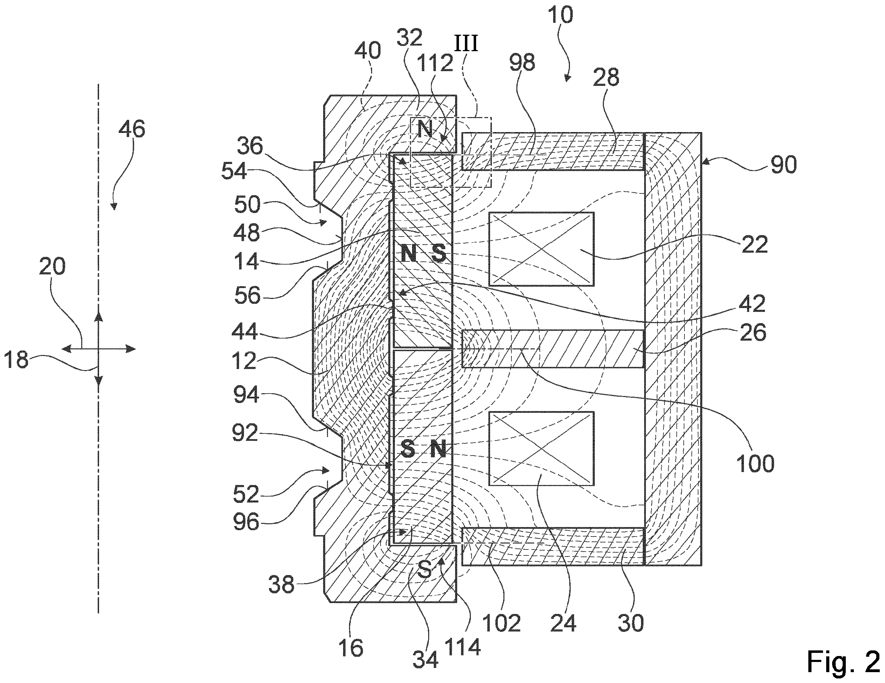

Fig. 2 zeigt eine schematische Teilansicht der Aktorvorrichtung 10 mit angedeuteten Magnetfeldlinien 40, insbesondere der Permanentmagnete 14, 16. Anhand der in der Fig. 2 angedeuteten Magnetfeldlinien 40 und Magnetpole N,S wird ersichtlich, dass der Permanentmagnet 14, 16 derart in dem Ankerelement 12 angeordnet ist, dass an einem in der Axialrichtung 18 des Ankerelements 12 außenliegenden Ende 36, 38 des Permanentmagnets 14, 16 die Magnetfeldlinien 40 eines in der Radialrichtung 20 des Ankerelements 12 innenliegenden Magnetpols des Permanentmagnets 14, 16 durch das Material eines die Einkapselung ausbildenden Teils 32, 34 des Ankerelements 12 zurück nach außen zu den außenliegenden Magnetjochen 28, 30 geführt sind. Dadurch bilden sich an den jeweiligen die Einkapselung ausbildenden Teilen 32, 34 des Ankerelements 12 jeweils den innenliegenden Magnetpolen entsprechende Magnetpole aus. Dadurch kann vorteilhaft auf zusätzliche kostenintensive Permanentmagnete oberhalb des Permanentmagnets 14 oder unterhalb des weiteren Permanentmagnets 16 verzichtet werden.

Positionen von Übergängen 98, 100, 102 zwischen Magnetpolen sind in der Fig. 2 entlang der Axialrichtung 18 durch horizontale Linien gekennzeichnet. Die Übergänge 98, 102 von Magnetpolen eines der Permanentmagnete 14, 16 zu einem der die Einkapselung ausbildenden Teile 32, 34 des Ankerelements 12 sind entlang der Axialrichtung 18 an den außenliegenden Enden 36, 38 der Permanentmagnete 14, 16 angeordnet. In dem Ruhebetriebszustand sind die Permanentmagnete 14, 16 derart relativ zu den Magnetjochen 26, 28, 30 angeordnet, dass ein Übergang 100 von einem Nordpol N eines der Permanentmagnete 14, 16, beispielsweise des oberen Permanentmagnets 14, zu einem Südpol des anderen Permanentmagnets 14, 16, beispielsweise des unteren Permanentmagnets 16, entlang der Axialrichtung 18 des Ankerelements 12 gesehen auf einer Höhe des jeweiligen nächstliegenden Magnetjochs 26, 28, 30 angeordnet ist. In dem Ruhebetriebszustand sind die Permanentmagnete 14, 16 und die die Einkapselung ausbildenden Teile 32, 34 des Ankerelements 12 derart relativ zu den Magnetjochen 26, 28, 30 angeordnet, dass jeweils ein Übergang 98, 102 von einem Magnetpol eines der Permanentmagnete 14, 16 zu den jeweiligen zugeordneten die Einkapselung ausbildenden Teilen 32, 34 des Ankerelements 12, entlang der Axialrichtung 18 des Ankerelements 12, gesehen auf einer Höhe des jeweiligen nächstliegenden Magnetjochs 26, 28, 30 angeordnet ist. Der Übergang 98 zwischen dem in der Axialrichtung 18 obenliegenden, die Einkapselung ausbildenden Teil 32 des Ankerelements 12 zu dem in der Axialrichtung 18 oberen Permanentmagnet 14 ist in dem Ruhebetriebszustand auf Höhe des zweiten Magnetjochs 28 angeordnet. Der Übergang 102 zwischen dem in der Axialrichtung 18 untenliegenden, die Einkapselung ausbildenden Teil 34 des Ankerelements 12 zu dem in der Axialrichtung 18 unteren Permanentmagnet 16 ist in dem Ruhebetriebszustand auf Höhe des dritten Magnetjochs 30 angeordnet. Der Übergang 100 zwischen den außenliegenden Magnetpolen der beiden Permanentmagnete 14, 16 ist in dem Ruhebetriebszustand auf Höhe des ersten Magnetjochs 26 angeordnet.

Der Aufnahmebereich 42 des Ankerelements 12 weist radial abgesetzte Erhebungen 44 auf. Die radial abgesetzten Erhebungen 44 erstrecken sich in der Radialrichtung 20 nach außen. Die radial abgesetzten Erhebungen 44 erstrecken sich in der Radialrichtung 20 auf die in dem Aufnahmebereich 42 angeordneten Permanentmagnete 14, 16 zu. Die radial abgesetzten Erhebungen 44 sind dazu vorgesehen, die mit dem Ankerelement 12 gekoppelten Permanentmagnete 14, 16 zu kontaktieren. Die radial abgesetzten Erhebungen 44 sind dazu vorgesehen an einer Rückseite des Aufnahmebereichs 42, Spalte 92 zwischen den Permanentmagneten 14, 16 und dem Ankerelement 12 auszubilden. Die Spalte 92 können zur Aufnahme eines Klebstoffs zur Befestigung der Permanentmagnete 14, 16 an dem Ankerelement 12 vorgesehen sein.

Der Hohlraum 46 im Inneren des Ankerelements 12 weist eine Innenwand 48 auf. Der Hohlraum 46 weist an der Innenwand 48 eine erste Ausnehmung 50 auf. Der Hohlraum 46 weist an der Innenwand 48 eine zweite Ausnehmung 52 auf. Die Ausnehmungen 50, 52 sind als rillenförmige Vertiefungen und/oder Freidrehungen an der Innenwand 48 des Hohlraums 46 ausgebildet. Jeweils eine der Ausnehmungen 50, 52 der Innenwand 48 des Ankerelements 12 ist in dem Ruhebetriebszustand entlang der Axialrichtung 18 des Ankerelements 12 mittig auf Höhe jeweils eines der Permanentmagnete 14, 16 angeordnet. Die Ausnehmungen 50, 52 der Innenwand 48 des Ankerelements 12 weisen jeweils zwei Seitenwände 54, 56, 94, 96 auf. Die Seitenwände 54, 56, 94, 96 der Ausnehmungen 50, 52 sind relativ zu der Axialrichtung 18 des Ankerelements 12 angewinkelt. Die Seitenwände 54, 56, 94, 96 der Ausnehmungen 50, 52 sind relativ zu der Axialrichtung 18 des Ankerelements 12 um etwa 60° angewinkelt. Die Seitenwände 54, 56, 94, 96 der Ausnehmungen 50, 52 sind relativ zu der Radialrichtung 20 des Ankerelements 12 angewinkelt. Die Seitenwände 54, 56, 94, 96 der Ausnehmungen 50, 52 sind relativ zu der Radialrichtung 20 des Ankerelements 12 um etwa 30° angewinkelt. Wie aus der Fig. 2 ersichtlich ist, sind die Ausnehmungen 50, 52 der Seitenwände 54, 56, 94, 96 des Hohlraums 46 des Ankerelements 12 dazu vorgesehen, die Magnetfeldlinien 40 der Permanentmagnete 14, 16 zu führen. Die Ausnehmungen 50, 52 der Seitenwände 54, 56, 94, 96 des Hohlraums 46 des Ankerelements 12 sind dazu vorgesehen, die Magnetfeldlinien 40 der Permanentmagnete 14, 16 auf vorteilhafte Weise aufzuspalten.

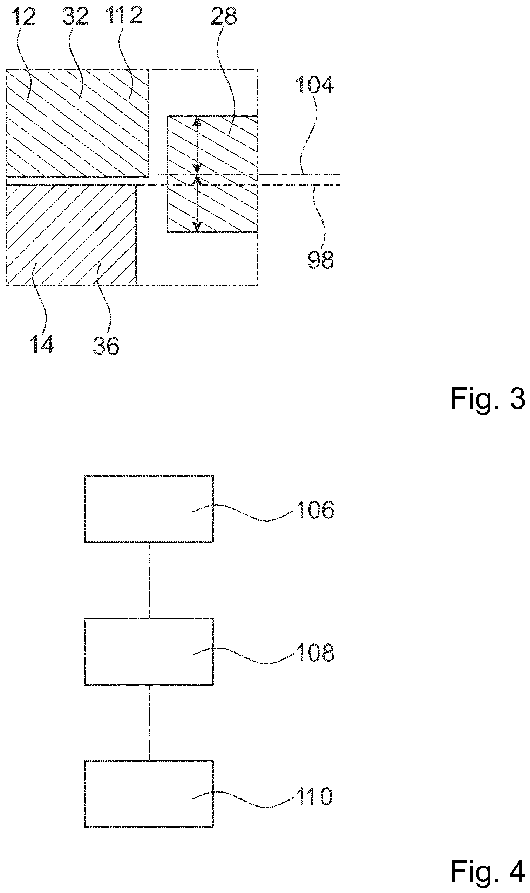

Fig. 3 zeigt einen vergrößerten Ausschnitt (vgl. gestrichelter Kasten in Fig. 2) der Aktorvorrichtung 10 mit dem zweiten Magnetjoch 28, dem oberen die Einkapselung ausbildenden Teil 32 des Ankerelements 12 und dem Permanentmagnet 14, insbesondere dem oberen außenliegenden Ende 36 des oberen Permanentmagnets 14 in dem Ruhebetriebszustand. Die Übergänge 98, 102 der Magnetpole der Permanentmagnete 14, 16 zu den die Einkapselung ausbildenden Teilen 32, 34 des Ankerelements 12 sind jeweils in der Axialrichtung 18 des Ankerelements 12 relativ zu einer Mitte 104 des nächstliegenden Magnetjochs 28, 30 versetzt angeordnet. Die Übergänge 98, 102 der Magnetpole der Permanentmagnete 14, 16 zu den die Einkapselung ausbildenden Teilen 32, 34 des Ankerelements 12 sind jeweils in der Axialrichtung 18 des Ankerelements 12 in Richtung der Magnetspulen 22, 24 und/oder in Richtung des ersten Magnetjochs 26 versetzt angeordnet.

Die Permanentmagnete 14, 16 sind in der Radialrichtung 20 des Ankerelements 12 relativ zu den die Einkapselung ausbildenden Teilen 32, 34 des Ankerelements 12 versetzt angeordnet. Die Permanentmagnete 14, 16 sind in der Radialrichtung 20 des Ankerelements 12 relativ zu den die Einkapselung ausbildenden Teilen 32, 34 des Ankerelements 12 in Richtung eines Zentrums des Ankerelements 12 versetzt. Die Permanentmagnete 14, 16 sind in der Radialrichtung 20 des Ankerelements 12 relativ zu den die Einkapselung ausbildenden Teilen 32, 34 des Ankerelements 12 nach innen versetzt. Ein Abstand der Permanentmagnete 14, 16 zu dem jeweiligen in der Radialrichtung 20 gegenüberliegenden Magnetjoch 26, 28, 30 ist größer als ein Abstand der die Einkapselung ausbildenden Teile 32, 34 des Ankerelements 12 zu dem jeweiligen in der Radialrichtung 20 gegenüberliegenden Magnetjoch 26, 28, 30. Die Permanentmagnete 14, 16 sind in dem Aufnahmebereich 42 relativ zu den die Einkapselung ausbildenden Teilen 32, 34 des Ankerelements 12 radial zurückgesetzt.

Fig. 4 zeigt ein Ablaufdiagramm eines Verfahrens mit der Aktorvorrichtung 10. In zumindest einem Verfahrensschritt 106 wird ein radial magnetisierter Permanentmagnet 14, 16 derart in dem Aufnahmebereich 42 des Ankerelements 12 angeordnet, dass ein innenliegender Magnetpol des radial magnetisierten Permanentmagneten 14, 16 über einen den Permanentmagnet 14, 16 einkapselnden Teil 32, 34 des Ankerelements 12 wieder nach außen geführt wird und somit in Axialrichtung 18 oberhalb oder unterhalb des Permanentmagneten 14, 16 einen Magnetpol ausbildet, welcher entgegengesetzt ist zu dem außenliegenden Magnetpol des angrenzenden Permanentmagneten 14, 16. In zumindest einem weiteren Verfahrensschritt 108 wird durch eine gemeinsame Spannungsversorgung (nicht gezeigt) eine gleichzeitige Bestromung der zwei Magnetspulen 22, 24 mit unterschiedlichem Wickelsinn erzeugt, wodurch entgegengesetzt ausgerichtete Magnetfelder in den in Axialrichtung 18 übereinander angeordneten Magnetspulen 22, 24 erzeugt werden. In zumindest einem weiteren Verfahrensschritt 110 wird eine Bewegung des Ankerelements 12 mittels einer gezielten Bestromung der Magnetspulen 22, 24 derart gesteuert, dass durch die Bewegung des Ankerelements 12 externe Schwingungen kompensiert, reduziert und/oder getilgt werden.

### Bezugszeichen

- 10: Aktorvorrichtung
- 12: Ankerelement
- 14: Permanentmagnet
- 16: Permanentmagnet
- 18: Axialrichtung
- 20: Radialrichtung
- 22: Magnetspule
- 24: Magnetspule
- 26: Magnetjoch
- 28: Magnetjoch
- 30: Magnetjoch
- 32: Teil
- 34: Teil
- 36: Ende
- 38: Ende
- 40: Magnetfeldlinien
- 42: Aufnahmebereich
- 44: Erhebung
- 46: Hohlraum
- 48: Innenwand
- 50: Ausnehmung
- 52: Ausnehmung
- 54: Seitenwand
- 56: Seitenwand
- 58: Federelement
- 60: Anschlagselement
- 62: Dämpfungselement
- 64: Magnetaktor
- 66: Gehäuse
- 68: Spulenkörper
- 70: Spulenkörper
- 72: Achse
- 74: Umspritzung
- 76: Kundenschnittstelle
- 78: Anschlagselement
- 80: Federhalterung
- 82: Federelement
- 84: Ende
- 86: Ende
- 88: Dämpfungselement
- 90: Magnetkreis
- 92: Spalt
- 94: Seitenwand
- 96: Seitenwand
- 98: Übergang
- 100: Übergang
- 102: Übergang
- 104: Mitte
- 106: Verfahrensschritt
- 108: Verfahrensschritt
- 110: Verfahrensschritt
- 112: Ende
- 114: Ende
- S: Magnetischer Südpol
- N: Magnetischer Nordpol

## Patentansprüche

1. Aktorvorrichtung (10) zur aktiven Schwingungsreduzierung, -dämpfung und/oder -tilgung, insbesondere von durch eine externe Vorrichtung erzeugten Schwingungen, mit zumindest einem beweglich gelagerten Ankerelement (12) und mit zumindest einem mit dem Ankerelement (12), insbesondere mit einer Außenseite des Ankerelements (12), gekoppelten und zumindest abschnittsweise, insbesondere ringförmig, um das Ankerelement (12) verlaufenden Permanentmagnet (14), wobei der Permanentmagnet (14) zumindest in einer zumindest im Wesentlichen parallel zu einer Hauptbewegungsachse des Ankerelements (12) verlaufenden Axialrichtung (18) des Ankerelements (12) von dem Ankerelement (12), insbesondere zumindest zu zwei Seiten, eingekapselt ist, wobei das Ankerelement (12) in seinem Inneren zumindest einen Hohlraum (46) aufweist, **dadurch gekennzeichnet, dass** der Hohlrraum (46) an einer Innenwand (48) zumindest eine Ausnehmung (50, 52) aufweist.

2. Aktorvorrichtung (10) nach Anspruch 1, **dadurch gekennzeichnet, dass** der Permanentmagnet (14) in einer Radialrichtung (20) des Ankerelements (12) eine Oberfläche des Ankerelements (12) ausbildet.

3. Aktorvorrichtung (10) nach Anspruch 1 oder 2, **dadurch gekennzeichnet, dass** der Permanentmagnet (14) radial magnetisiert ist.

4. Aktorvorrichtung (10) nach einem der vorhergehenden Ansprüche, **gekennzeichnet durch** zumindest einen weiteren von dem Ankerelement (12) in der Axialrichtung (18) des Ankerelements (12) eingekapselten Permanentmagnet (16), welcher abgesehen von einer im Vergleich mit dem Permanentmagneten (14) umgedrehten radialen Magnetisierung, zumindest im Wesentlichen identisch zu dem Permanentmagnet (14) ausgebildet ist.

5. Aktorvorrichtung (10) nach einem der vorhergehenden Ansprüche, **gekennzeichnet durch** zumindest zwei Magnetspulen (22, 24), deren Spulenwicklungen in Umfangsrichtung des Ankerelements (12) um das Ankerelement (12) verlaufen.

6. Aktorvorrichtung (10) nach Anspruch 5, **dadurch gekennzeichnet, dass** die Spulenwicklungen der zwei Magnetspulen (22, 24) einen zueinander entgegengesetzten Wickelsinn aufweisen.

7. Aktorvorrichtung (10) nach Anspruch 5 oder 6, **gekennzeichnet durch** zumindest ein Magnetjoch (26), welches in der Axialrichtung (18) des Ankerelements (12) gesehen zwischen den zwei Magnetspulen (22, 24) angeordnet ist.

8. Aktorvorrichtung (10) nach einem der Ansprüche 5 bis 7, **gekennzeichnet durch** zumindest ein weiteres Magnetjoch (28, 30), welches in der Axialrichtung (18) des Ankerelements (12) gesehen oberhalb oder unterhalb der zwei Magnetspulen (22, 24) angeordnet ist.

9. Aktorvorrichtung (10) zumindest nach den Ansprüchen 4 und 7, **dadurch gekennzeichnet, dass** zumindest in einem Ruhebetriebszustand die Permanentmagnete (14, 16) derart relativ zu den Magnetjochen (26, 28, 30) angeordnet sind, dass ein Übergang (100) von einem Nordpol eines der Permanentmagnete (14, 16) zu einem Südpol des anderen Permanentmagnets (14, 16) und/oder ein Übergang (98, 102) von einem Magnetpol eines der Permanentmagnete (14, 16) zu einem die Einkapselung ausbildenden Teil (32, 34) des Ankerelements (12) entlang der Axialrichtung (18) des Ankerelements (12) gesehen auf einer Höhe des jeweiligen nächstliegenden Magnetjochs (26, 28, 30) angeordnet ist.

10. Aktorvorrichtung (10) nach Anspruch 9, **dadurch gekennzeichnet, dass** der Übergang (98, 102) des Magnetpols eines der Permanentmagnete (14, 16) zu einem der die Einkapselung ausbildenden Teile (32, 34) des Ankerelements (12) in der Axialrichtung (18) des Ankerelements (12) relativ zu einer Mitte (104) des nächstliegenden Magnetjochs (28, 30) versetzt angeordnet ist.

11. Aktorvorrichtung (10) zumindest nach Anspruch 7, **dadurch gekennzeichnet, dass** der Permanentmagnet (14, 16) derart in dem Ankerelement (12) angeordnet ist, dass an einem in der Axialrichtung (18) des Ankerelements (12) außenliegenden Ende (36, 38) des Permanentmagnets (14, 16) die Magnetfeldlinien (40) eines in der Radialrichtung (20) des Ankerelements (12) innenliegenden Magnetpols des Permanentmagnets (14, 16) durch ein Material eines die Einkapselung ausbildenden Teils (32, 34) des Ankerelements (12) zurück nach außen zu dem Magnetjoch (28, 30) geführt sind.

12. Aktorvorrichtung (10) nach einem der vorhergehenden Ansprüche, **dadurch gekennzeichnet, dass** der Permanentmagnet (14, 16) in einer Radialrichtung (20) des Ankerelements (12) relativ zu dem die Einkapselung ausbildenden Teil (32, 34) des Ankerelements (12) in Richtung eines Zentrums des Ankerelements (12) nach innen versetzt ist.

13. Aktorvorrichtung (10) nach einem der vorhergehenden Ansprüche, **dadurch gekennzeichnet, dass** das Ankerelement (12) einen Aufnahmebereich (42) aufweist, welcher dazu vorgesehen ist, zumindest den Permanentmagnet (14, 16) aufzunehmen, wobei der Aufnahmebereich (42) radial abgesetzte Erhebungen (44) aufweist.

14. Aktorvorrichtung (10) nach Anspruch 1, **dadurch gekennzeichnet, dass** die Ausnehmung (50, 52) der Innenwand (48) des Ankerelements (12) entlang der Axialrichtung (18) des Ankerelements (12) zumindest im Wesentlichen mittig auf einer Höhe des Permanentmagnets (14, 16) angeordnet ist.

15. Aktorvorrichtung (10) nach Anspruch 1 oder 14, **dadurch gekennzeichnet, dass** die Ausnehmung (50, 52) der Innenwand (48) des Ankerelements (12) zumindest eine Seitenwand (54, 56, 94, 96) aufweist, welche relativ zu der Axialrichtung (18) des Ankerelements (12) und/oder relativ zu einer Radialrichtung (20) des Ankerelements (12) angewinkelt ist.

16. Aktorvorrichtung (10) nach einem der vorhergehenden Ansprüche, **gekennzeichnet durch** zumindest ein Federelement (58, 82) welches zu einer radialen Lagerung des Ankerelements (12) vorgesehen ist.

17. Aktorvorrichtung (10) nach einem der vorhergehenden Ansprüche, **gekennzeichnet durch** zumindest ein Anschlagselement (60, 78), welches dazu vorgesehen ist, eine Bewegung des Ankerelements (12) entlang der Axialrichtung (18) zu begrenzen.

18. Aktorvorrichtung (10) nach Anspruch 17, **gekennzeichnet durch** zumindest ein Dämpfungselement (62, 88), welches dazu vorgesehen ist, einen Anschlag des Ankerelements (12) an das Anschlagselement (60, 78) abzudämpfen.

19. Magnetaktor (64) mit einer Aktorvorrichtung (10) zur aktiven Schwingungsreduzierung, -dämpfung und/oder -tilgung nach einem der vorhergehenden Ansprüche.

20. Schwingungsgedämpftes Motorlager mit einem Magnetaktor (64) nach Anspruch 19.

21. Verfahren zur aktiven Schwingungsreduzierung mit einer Aktorvorrichtung (10) nach einem der Ansprüche 1 bis 18, mit einem Magnetaktor (64) nach Anspruch 19 und/oder mit einem Motorlager nach Anspruch 20, wobei durch die Bewegung des Ankerlements (12) externe Schwingungen reduziert werden.

## Claims

1. An actuator device (10) for active reduction, damping and/or absorption of vibrations, in particular of vibrations generated by an external device, with at least one movably supported armature element (12) and with at least one permanent magnet (14), which is coupled with the armature element (12), in particular an outer side of the armature element (12), and which extends around the armature element (12) at least section-wise, in particular in a ring shape, wherein at least in an axial direction (18) of the armature element (12), which runs at least substantially parallel to a main movement axis of the armature element (12), the permanent magnet (14) is encapsulated by the armature element (12), in particular at least on two sides, wherein the armature element (12) comprises in its interior at least one hollow space (46), **characterized in that** the hollow space (46) has at least one recess (50, 52) on an inner wall (48).

2. The actuator device (10) according to claim 1, **characterized in that** in a radial direction of the armature element (12), the permanent magnet (14) forms a surface of the armature element (12).

3. The actuator device (10) according to claim 1 or 2, **characterized in that** the permanent magnet (14) is magnetized radially.

4. The actuator device (10) according to one of the preceding claims, **characterized by** at least one further permanent magnet (16), which is encapsulated by the armature element (12) in the axial direction (18) of the armature element (12) and which, except for a radial magnetization that is inverse with respect to the permanent magnet (14), is implemented at least substantially identically to the permanent magnet (14).

5. The actuator device (10) according to one of the preceding claims, **characterized by** at least two magnet coils (22, 24), whose coil windings extend around the armature element (12) in a circumferential direction of the armature element (12).

6. The actuator device (10) according to claim 5, **characterized in that** the coil windings of the two magnet coils (22, 24) have mutually opposed winding directions.

7. The actuator device (10) according to claim 5 or 6, **characterized by** at least one magnet yoke (26), which is, viewed in the axial direction (18) of the armature element (12), arranged between the two magnet coils (22, 24).

8. The actuator device (10) according to one of claims 5 to 7, **characterized by** at least one further magnet yoke (28, 30), which is, viewed in the axial direction (18) of the armature element (12), arranged above or below the two magnet coils (22, 24).

9. The actuator device (10) at least according to claims 4 and 7, **characterized by** at least in one resting operation state, the permanent magnets (14, 16) are arranged relative to the magnet yokes (26, 28, 30) in such a way that, viewed along the axial direction (18) of the armature element (12), a transition (100) from a north pole of one of the permanent magnets (14, 16) to a south pole of the other permanent magnet (14, 16) and/or a transition (98, 102) from a magnet pole of one of the permanent magnets (14, 16) to a part (32, 34) of the armature element (12) that forms the encapsulation are/is arranged on a level with the respective nearest magnet yoke (26, 28, 30).

10. The actuator device (10) according to claim 9, **characterized in that** the transition (98, 102) from the magnet pole of one of the permanent magnets (14, 16) to one of the parts (32, 34) of the armature element (12) forming the encapsulation is arranged offset relative to a center (104) of the nearest magnet yoke (28, 30) in the axial direction (18) of the armature element (12).

11. The actuator device (10) at least according to claim 7, **characterized in that** the permanent magnet (14, 16) is arranged in the armature element (12) in such a way that, on an end (36, 38) of the permanent magnet (14, 16) that is situated outside in the axial direction (18) of the armature element (12), the magnetic field lines (40) of a magnet pole of the permanent magnet (14, 16) that is situated inside in the radial direction (20) of the armature element (12) are guided back, through a material of a part (32, 34) of the armature element (12) that forms the encapsulation, outwards to the magnet yoke (28, 30).

12. The actuator device (10) according to one of the preceding claims, **characterized in that** relative to the part (32, 34) of the armature element (12) that forms the encapsulation, the permanent magnet (14, 16) is offset inwards toward a center of the armature element (12) in a radial direction (20) of the armature element (12).

13. The actuator device (10) according to one of the preceding claims, **characterized in that** the armature element (12) comprises a receiving region (42), which is configured to accommodate at least the permanent magnet (14, 16), the receiving region (42) having radially offset elevations (44).

14. The actuator device (10) according to claim 1, **characterized in that** the recess (50, 52) of the inner wall (48) of the armature element (12) is arranged along the axial direction (18) of the armature element (12) at least substantially centrally on a level with the permanent magnet (14, 16).

15. The actuator device (10) according to claim 1 or 14, **characterized in that** the recess (50, 52) of the inner wall (48) of the armature element (12) comprises at least one side wall (54, 56, 94, 96), which is angled relative to the axial direction (18) of the armature element (12) and/or relative to a radial direction (20) of the armature element (12).

16. The actuator device (10) according to one of the preceding claims, **characterized by** at least one spring element (58, 82), which is configured for a radial support of the armature element (12).

17. The actuator device (10) according to one of the preceding claims, **characterized by** at least one abutment element (60, 78), which is configured to delimit a movement of the armature element (12) along the axial direction (18).

18. The actuator device (10) according to claim 17, **characterized by** at least one damper element (62, 88), which is configured to damp an abutment of the armature element (12) on the abutment element (60, 78).

19. A magnetic actuator (64) with an actuator device (10) for active reduction, damping and/or absorption of vibrations according to one of the preceding claims.

20. A vibration-damped engine mount with a magnetic actor (64) according to claim 19.

21. A method for active reduction of vibrations with an actuator device (10) according to one of claims 1 to 18, with a magnetic actuator (64) according to claim 19 and/or with an engine mount according to claim 20, wherein external vibrations are reduced by the movement of the armature element (12).

## Revendications

1. Dispositif actionneur (10) pour la réduction, l'amortissement et/ou l'absorption active de vibrations, en particulier de vibrations générées par un dispositif externe, comprenant au moins un élément d'induit (12) monté de manière mobile et au moins un aimant permanent (14) couplé à l'élément d'induit (12), en particulier à un côté extérieur de l'élément d'induit (12), et s'étendant au moins en partie, en particulier de manière annulaire, autour de l'élément d'induit (12), l'aimant permanent (14) étant encapsulé au moins dans une direction axiale (18) de l'élément d'induit (12) s'étendant au moins sensiblement parallèlement à un axe de mouvement principal de l'élément d'induit (12), en particulier au moins sur deux côtés, l'élément d'induit (12) présentant dans son intérieur au moins une cavité (46), **caractérisé en ce que** la cavité (46) présente au moins un évidement (50, 52) au niveau d'une paroi intérieure (48).

2. Dispositif actionneur (10) selon la revendication 1, **caractérisé en ce que** l'aimant permanent (14) forme une surface de l'élément d'induit (12) dans une direction radiale (20) de l'élément d'induit (12).

3. Dispositif actionneur (10) selon la revendication 1 ou 2, **caractérisé en ce que** l'aimant permanent (14) est magnétisé radialement.

4. Dispositif actionneur (10) selon l'une quelconque des revendications précédentes, **caractérisé par** au moins un autre aimant permanent (16) encapsulé par l'élément d'induit (12) dans la direction axiale (18) de l'élément d'induit (12), lequel est réalisé au moins sensiblement identique à l'aimant permanent (14), à l'exception d'une magnétisation radiale inversée par rapport à l'aimant permanent (14).

5. Dispositif actionneur (10) selon l'une quelconque des revendications précédentes, **caractérisé par** au moins deux bobines magnétiques (22, 24), dont les enroulements de bobine s'étendent dans la direction périphérique de l'élément d'induit (12) autour de l'élément d'induit (12).

6. Dispositif actionneur (10) selon la revendication 5, **caractérisé en ce que** les enroulements de bobine des deux bobines magnétiques (22, 24) présentent un sens d'enroulement opposé l'un à l'autre.

7. Dispositif actionneur (10) selon la revendication 5 ou 6, **caractérisé par** au moins une culasse magnétique (26), qui est disposée, vue dans la direction axiale (18) de l'élément d'induit (12), entre les deux bobines magnétiques (22, 24).

8. Dispositif actionneur (10) selon l'une quelconque des revendications 5 à 7, **caractérisé par** au moins une autre culasse magnétique (28, 30), qui est disposée, vue dans la direction axiale (18) de l'élément d'induit (12), au-dessus ou en dessous des deux bobines magnétiques (22, 24).

9. Dispositif actionneur (10) au moins selon les revendications 4 et 7, **caractérisé en ce qu'**au moins dans un état de fonctionnement au repos, les aimants permanents (14, 16) sont disposés par rapport aux culasses magnétiques (26, 28, 30) de telle sorte qu'une transition (100) d'un pôle nord de l'un des aimants permanents (14, 16) à un pôle sud de l'autre aimant permanent (14, 16) et/ou une transition (98, 102) d'un pôle magnétique de l'un des aimants permanents (14, 16) à une partie (32, 34) de l'élément d'induit (12) formant l'encapsulation, vue le long de la direction axiale (18) de l'élément d'induit (12), est disposée à une hauteur de la culasse magnétique (26, 28, 30) respective la plus proche.

10. Dispositif actionneur (10) selon la revendication 9, **caractérisé en ce que** la transition (98, 102) du pôle magnétique de l'un des aimants permanents (14, 16) à l'une des parties (32, 34) de l'élément d'induit (12) formant l'encapsulation est disposée de manière décalée dans la direction axiale (18) de l'élément d'induit (12) par rapport à un centre (104) de la culasse magnétique (28, 30) la plus proche.

11. Dispositif actionneur (10) au moins selon la revendication 7, **caractérisé en ce que** l'aimant permanent (14, 16) est disposé dans l'élément d'induit (12) de telle sorte que, au niveau d'une extrémité (36, 38) de l'aimant permanent (14, 16) située à l'extérieur dans la direction axiale (18) de l'élément d'induit (12), les lignes de champ magnétique (40) d'un pôle magnétique de l'aimant permanent (14, 16) situé à l'intérieur dans la direction radiale (20) de l'élément d'induit (12) sont guidées à travers un matériau d'une partie (32, 34) de l'élément d'induit (12) formant l'encapsulation de retour vers l'extérieur vers la culasse magnétique (28, 30).

12. Dispositif actionneur (10) selon l'une quelconque des revendications précédentes, **caractérisé en ce que** l'aimant permanent (14, 16) est décalé vers l'intérieur dans une direction radiale (20) de l'élément d'induit (12) par rapport à la partie (32, 34) de l'élément d'induit (12) formant l'encapsulation dans la direction d'un centre de l'élément d'induit (12).

13. Dispositif actionneur (10) selon l'une quelconque des revendications précédentes, **caractérisé en ce que** l'élément d'induit (12) présente une région de réception (42), qui est prévue pour recevoir au moins l'aimant permanent (14, 16), la région de réception (42) présentant des élévations (44) décalées radialement.

14. Dispositif actionneur (10) selon la revendication 1, **caractérisé en ce que** l'évidement (50, 52) de la paroi intérieure (48) de l'élément d'induit (12) est disposé le long de la direction axiale (18) de l'élément d'induit (12) au moins sensiblement au centre à une hauteur de l'aimant permanent (14, 16).

15. Dispositif actionneur (10) selon la revendication 1 ou 14, **caractérisé en ce que** l'évidement (50, 52) de la paroi intérieure (48) de l'élément d'induit (12) présente au moins une paroi latérale (54, 56, 94, 96), qui est coudée par rapport à la direction axiale (18) de l'élément d'induit (12) et/ou par rapport à une direction radiale (20) de l'élément d'induit (12).

16. Dispositif actionneur (10) selon l'une quelconque des revendications précédentes, **caractérisé par** au moins un élément de ressort (58, 82) qui est prévu pour un support radial de l'élément d'induit (12).

17. Dispositif actionneur (10) selon l'une quelconque des revendications précédentes, **caractérisé par** au moins un élément de butée (60, 78), qui est prévu pour limiter un mouvement de l'élément d'induit (12) le long de la direction axiale (18).

18. Dispositif actionneur (10) selon la revendication 17, **caractérisé par** au moins un élément d'amortissement (62, 88), qui est prévu pour amortir une butée de l'élément d'induit (12) contre l'élément de butée (60, 78).

19. Actionneur magnétique (64) avec un dispositif actionneur (10) pour la réduction, l'amortissement et/ou l'absorption active de vibrations selon l'une quelconque des revendications précédentes.

20. Support moteur amorti par vibrations avec un actionneur magnétique (64) selon la revendication 19.

21. Procédé de réduction active de vibrations avec un dispositif actionneur (10) selon l'une quelconque des revendications 1 à 18, avec un actionneur magnétique (64) selon la revendication 19 et/ou avec un support moteur selon la revendication 20, des vibrations externes étant réduites par le mouvement de l'élément d'induit (12).
